# EUROPEAN PATENT SPECIFICATION

(11) **EP 2 904 938 B1**
(45) Date of publication and mention of the grant of the patent: **13.09.2017**
(21) Application number: 15275021.2
(22) Date of filing: 20.01.2015
(51) Int. Cl.: A47B 47/00

(54) **Modular platform**
Modulare Plattform
Plateforme modulaire

(30) Priority: 05.02.2014 GB 201401987
(43) Date of publication of application: 12.08.2015
(73) Proprietor: CASCO Europe Limited, Horsham, West Sussex RH12 3JR (GB)
(72) Inventor: Bubear, Matthew, Horsham, West Sussex RH12 3JR (GB)
(74) Representative: Windsor, Louise

(56) References cited:
- WO-A1-94/21961
- FR-A- 1 158 964
- FR-A3- 2 599 095
- US-A- 2 441 461
- US-A- 4 053 194

## Description

The present invention relates to a modular platform for supporting a display which comprises one or more aquatic tanks. Specialist racks for displaying aquatics such as freshwater and marine livestock; invertebrates; small animals; reptiles and bird displays are known. For example, to allow multiple display tanks to be supported and split over multiple levels a multi-level frame or scaffold is constructed from tubular support elements and angular joints. For example, patent publication FR2599095 describes an angle joint for assembling tubular elements to form frame racks, shelves, and walls etc., which are suitable for displays in shops. The angle joint coupling of FR2599095 consists of a plastic body with a metal reinforcing core. The coupling has two arms perpendicular to each other, with each arm configured to mate with metallic tubular elements that are used to form the uprights and cross-frame supports for building a display. The shape of the tubular element is configured to receive the arm of the coupling, which when inserted abuts an axial seat. The axial seat has projections to interact with the surface of the arms of the coupling to ensure that the coupling strength of the display structure is sufficiently stable.

When constructing an aquatics display, in addition to the aesthetic appeal, the safety of the construction has to be considered. The tanks within the display include electrical devices such as filters, circulation pumps, heaters and lighting. Care has to be taken to avoid any electricity being carried to the metal components of the display frame, which can cause electric shocks or electrocution. The metal components of the coupling of FR2599095 are encased in plastic to prevent electricity being transmitted through the coupling. Each of the metallic tubular supports are separately earthed. For example, each metallic support is electrically connected to a grounding rod to separately earth each conducting component of the display. However, it has been found that, if there is a fault in any one of the earthing connections, or if any part of the metal frame is not earthed, there is a risk of electrocution. Furthermore, a large display requires a considerable number of connections. As the complexity of displays increases the earthing requirements to avoid the risk of electrocution and ensure a display is safe are also more complicated.

The present invention sets out to alleviate the problems described above by providing an improved modular platform. The invention provides a modular platform for supporting a display which comprises one or more aquatic tanks, the modular platform comprising,two or more joints, each joint comprising two or more arms, wherein the joint comprises a metal core partially encased by a non-conductive cover means and the metal core is exposed through the cover means at one or more contact points; at least one tubular support member configured to receive one or more arms from the one or more joints to provide electrical connection around the platform, via the joints between each of the support members; the modular platform comprising an electrical connection means to earth. Preferably, the modular platform comprises a single electrical connection means to earth.

The present invention offers a much safer and simpler construction to earth the modular platform and avoid the risk that anyone that comes into contact with the platform or display could be electrocuted. Essentially, by ensuring that there is electrical connection around the platform, via the joints between each of the support members, the entire modular platform is "live" i.e. electrically conducting. However, the "live" frame is earthed at a single point. By earthing the system through a single point, the installation and maintenance of the earth connection is simplified. Thus, the risk of any point in the modular platform being unintentionally "live" is avoided.

Preferably, the or each electrical connections means to earth comprises a grounding rod.

Preferably, the grounding rod comprises a non-corrosive material.

For the purposes of clarity and a concise description, features are described herein as part of the same or separate embodiments; however it will be appreciated that the scope of the invention defined by the appended claims may include embodiments having combinations of all or some of the features described.

The invention will now be described by way of example with reference to the accompanying diagrammatic drawings, in which:-
Figure 1 is a perspective view of a joint of a modular platform in accordance with the present invention;
Figure 2 is a perspective view of a joint of a modular platform in accordance with a second embodiment of the present invention;
Figure 3 is a perspective view of a joint of a modular platform in accordance with a third embodiment of the present invention; and
Figure 4 is a perspective view of a display platform comprising multiple joints and support members in accordance with the present invention.

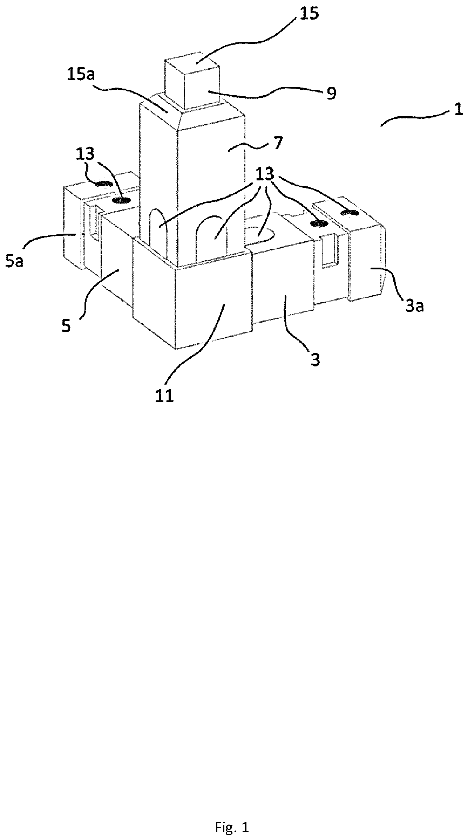

Referring to **FIGURE 1****,** in a first embodiment of the present invention, the joint 1 comprises three arms 3, 5, 7. Each of the arms 3, 5, 7 is perpendicular to the others, so that the arms lie in the x, y, and planes respectively. Each arm 3, 5, 7 has a substantially square cross section. The joint comprises a metal core 9, which is covered by a plastic, non-conductive, insulating cover 11. The body of the joint 1 has multiple electrical contact points 13 at which the metal core 9 is exposed through the insulating cover 11. Two of the arms 3, 5 have shaped ends 3a, 5a, which are fully encased in the plastic cover 11. As shown the ends 3a, 5a are shaped to taper inwardly so that the cross-sectional shape of the ends 3a, 5a is trapezoidal. The third arm 7 of the joint 1 comprises a protrusion 15, formed by the cuboidal metal core 9 protruding from the plastic cover 11. The end of the plastic cover from which the protrusion 15 protrudes is tapered to provide abutment surface 15a.

In use, the joint of the modular platform of the present invention is a mechanical fitting to retain multiple tubular support members to build a modular display frame. The tubular support members are made of aluminium, steel or a similar material and can be added or removed from the modular display as required. The frame is used to support multiple tanks, such as aquatics tanks, which are stacked on multiple levels. The tubular support members in combination with the joints of the modular platform of the present invention are used to construct a platform or scaffold to securely hold the tanks in place. The tubular support members each comprise a hollow, metal tube having a substantially cuboidal cross-section. The cross-section of each support member is configured to mate with the protrusion 15 and an arm 7 of the joint 1. In use, the protrusion 15 is inserted into the tubular support member to form a "push-fit" connection, whereby the rim of the support member is securely held over the abutment surface 15a of the plastic cover 11 of the joint 1.

The tanks, which are supported by the modular display frame include electrical equipment, including filters, circulation pumps, heaters, lighting, and the frame itself may include three-dimensional illuminated displays and/or television screens. The inclusion of electrical equipment requires the display frame to have an electrical connection between the frame and earth to prevent electrocution when a user comes into contact with any piece of conductive material in the frame. The joints of the modular platform of the present invention are used in a modular system having a single, common earth connection. The entire modular display frame is connected to the same earth i.e. grounding point. Thus, all current that passes around the modular display frame via the conducting tubular support members and the conducting joints is earthed through a single earthing means, such as a wired connection to a metal (copper or steel) grounding rod. When the system is used with aquatics tanks, an earthing rod is connected to the metal modular display frame, and a component part or spoke of the earthing rod is attached and partially immersed in the water container within the tank. Thus, the earthing rod connects the water to "aground". Each level of the modular display frame, or each individual structure, e.g. each tank, that is held within the frame is earthed to a suitable point

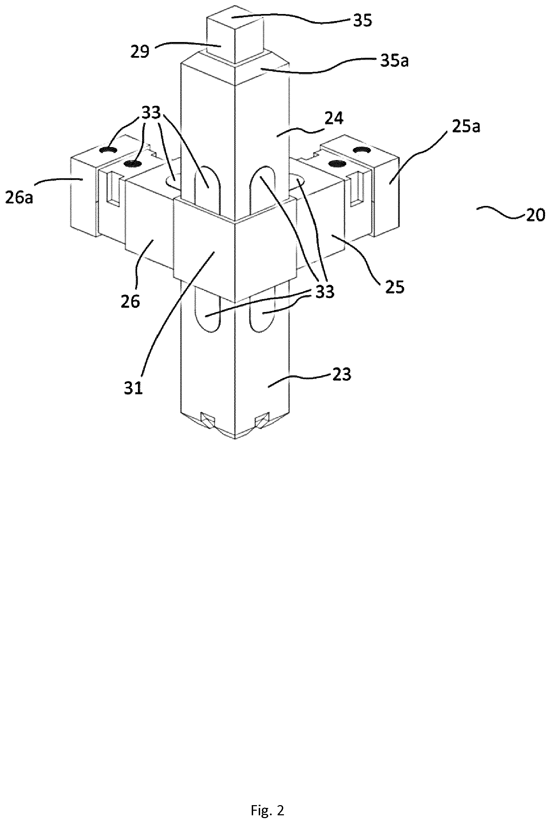

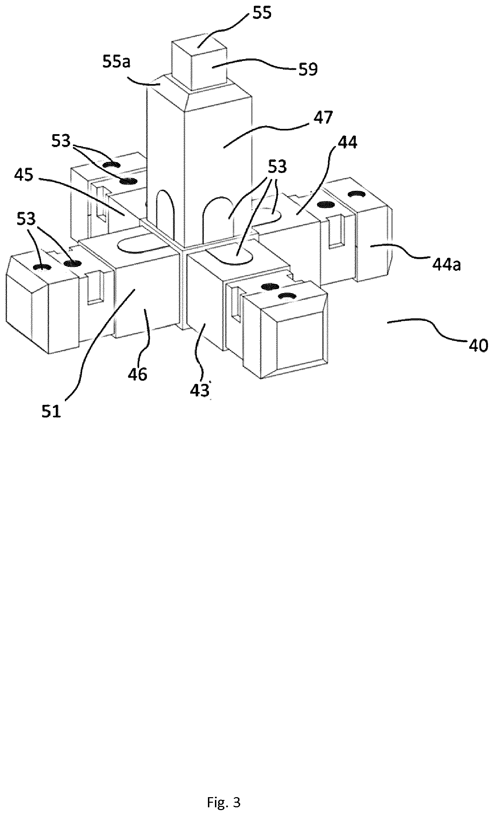

The embodiment of Figure 1 is a joint 1 used at the corner of a modular display frame. It is understood that the joints of the modular platform of the present invention comprise couplings of different shapes and configurations to allow a display frame to be constructed according to a user's requirements. For example, the joints of the modular platform of the present invention include, but are not limited to, T-junctions; cross-pieces; Y-pieces and end pieces. Further embodiments are described with reference to Figures 2 and 3.

As shown in **FIGURE 2****,** a cross-piece joint is constructed to allow a modular platform to be constructed to provide displays on multiple levels. For example, the displays can be stacked within the platform in 2, 3, 4, or 5 rows.

The cross-piece joint 20 comprise four arms 23, 24, 25, 26. Each of the arms 23, 24, 25, 26 is perpendicular to the others, so that the arms lie in the x, y, and z (positive and negative) planes respectively. It is understood that the cross-piece joint can be used in any orientation and reference to arm position relative to each other is given for illustrative purposes only. Each arm 23, 24, 25, 26 has a substantially square cross section. The joint comprises a metal core 29, which is covered by a plastic, non-conductive cover 31. The body of the joint 20 has multiple electrical contact points 33, where the metal core 29 is exposed through the cover 31. Two of the arms 25, 26 have shaped ends 25a, 26a, which are encased in the plastic cover 31. As shown, the ends 25a, 26a are shaped to taper inwardly so that the cross-sectional shape of the ends 25a, 26a is trapezoidal. The third and fourth arms 23, 24 of the joint 1 each comprise a protrusion 35, formed by the cuboidal metal core 29 protruding from the plastic cover 31. The end of the plastic cover from which the protrusion 35 protrudes is tapered to provide abutment surface 35a. In use, the cross-piece joint 20, shown in Figure 2, is used between levels of the modular platform at the end of each level. Each arm 23, 24, 25, 26 is received into a tubular support member to provide a "push-fit" connection.

Referring to **FIGURE 3****,** an alternative cross-piece joint 40 comprises five arms 43, 44, 45, 46, 47. Each of the arms 43, 44, 45, 46, 47 is perpendicular to the others, so that the arms lie in the x (positive and negative), y (positive and negative), and z planes respectively. It is understood that the cross-piece joint can be used in any orientation and reference to arm position relative to each other is given for illustrative purposes only. Each arm 43, 44, 45, 46, 47 has a substantially square cross section. The joint comprises a metal core 59, which is covered by a plastic, non-conductive cover 51. The body of the joint 40 has multiple electrical contact points 53, where the metal core 59 is exposed through the cover 51. Four of the arms 43, 44, 45, 46 have shaped ends 43a, 44a, 45a, 46a which are encased in the plastic cover 51. As shown, the ends 43a, 44a, 45a, 46a are shaped to taper inwardly so that the cross-sectional shape of the ends 43a, 44a, 45a, 46a is trapezoidal. The fifth arm 47 of the joint 40 comprises a protrusion 55, formed by the cuboidal metal core 59 protruding from the plastic cover 51. The end of the plastic cover 51 from which the protrusion 55 protrudes is tapered to provide abutment surface 55a. In use, the cross-piece joint 40, shown in Figure 3, is used between levels of the modular platform. Each arm 43, 44, 45, 46, 47 is received into a tubular support member to provide a "push-fit" connection.

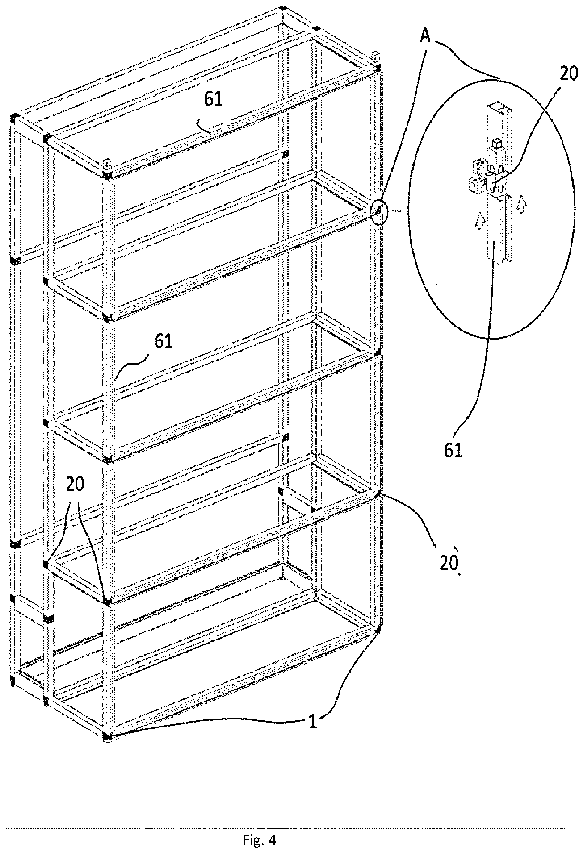

Referring to **Figure 4****,** a modular display platform 60 is shown incorporating the different embodiments described above. The joints 1, 20 are used to join multiple tubular support members 61 to form a multi-layer platform into which multiple aquatics tanks (not shown) are inserted and held. The display platform may also incorporate removable decorative fascia and backgrounds. The tanks can be compartmentalised and the platform (rack) can be modified as required by removing or adding further joints 1, 20, 40 and support members 61. The joints 1, 20, 40 and support members 61 are configured to avoid any obstruction of the tanks that are displayed. Enlargement A shows how a joint 20 is inserted into two or more support members 61 to build the modular display platform. The modular system has a single, common earth connection, whereby the entire modular display frame 60 is connected to the same earth i.e. grounding point. Thus, all current that passes around the modular display frame 60 via the conducting tubular support members 61 and the conducting joints 1, 20, 40 is earthed through a single earthing means, such as a wired connection to a metal (copper or steel) grounding rod.

The above described embodiment has been given by way of example only, and the skilled reader will naturally appreciate that many variations could be made thereto without departing from the scope of the claims.

## Claims

1. A modular platform (60) for supporting a display which comprises one or more aquatic tanks, the modular platform comprising,
two or more joints (1, 20, 40), each joint comprising two or more arms (3, 5, 7, 23, 24, 25, 26, 43, 44, 45, 46, 47), wherein the joint comprises a metal core (9, 29, 59) partially encased by a non-conductive cover means (11, 31, 51) and the metal core is exposed through the cover means at one or more contact points (13, 33, 53);
at least one tubular support member (61) configured to receive one or more arms (3, 5, 7, 23, 24, 25, 26, 43, 44, 45, 46, 47) from the one or more joints (1, 20, 40) to provide electrical connection around the platform, via the joints between each of the support members;
the modular platform (60) comprising an electrical connection means to earth.

2. A modular platform (60) according to claim 1 comprising a single electrical connection means to earth.

3. A modular platform (60) according to claim 1 or claim 2 wherein the or each electrical connection means to earth comprises a grounding rod.

4. A modular platform (60) according to claim 3 wherein the grounding rod comprises a non-corrosive material.

5. A modular platform (60) according to any preceding claim wherein the entire modular platform is live.

6. A modular platform (60) according to any preceding claim wherein the modular platform is earthed at a single point.

7. A modular platform (60) according to any preceding claim wherein an earthing rod is connected to the metal modular display frame, and a component part or spoke of the earthing rod is, in use, attached and partially immersible in a water container within an aquatics tank.

8. A modular platform (60) according to any preceding claim further comprising one or more aquatic tanks wherein each tank is held within the frame and each tank is earthed to a suitable point.

## Patentansprüche

1. Modulare Plattform (60) zum Tragen eines Schaukastens, der einen oder mehrere aquatische Behälter umfasst, wobei die modulare Plattform umfasst:
zwei oder mehr Verbindungen (1, 20, 40), wobei jede Verbindung zwei oder mehr Arme (3, 5, 7, 23, 24, 25, 26, 43, 44, 45, 46, 47) umfasst, wobei die Verbindung einen Metallkern (9, 29, 59) umfasst, der teilweise durch ein nicht leitendes Ummantelungsmittel (11, 31, 51) ummantelt ist, und der Metallkern an einem oder mehreren Kontaktpunkten (13, 33, 53) durch die Ummantelungsmittel exponiert ist;
zumindest ein rohrförmiges Tragelement (61), das konfiguriert ist, um einen oder mehrere Arme (3, 5, 7, 23, 24, 25, 26, 43, 44, 45, 46, 47) von dem einen oder den mehreren Verbindungen (1, 20, 40) zu empfangen, um über die Verbindungen zwischen jedem der Tragelemente eine elektrische Verbindung um die Plattform herum bereitzustellen;
wobei die modulare Plattform (60) ein elektrisches Verbindungsmittel zur Erde umfasst.

2. Modulare Plattform (60) nach Anspruch 1, ein einziges elektrisches Verbindungsmittel zur Erde umfassend.

3. Modulare Plattform (60) nach Anspruch 1 oder Anspruch 2, wobei das oder jedes elektrische Verbindungsmittel zur Erde einen Erdungsstab umfasst.

4. Modulare Plattform (60) nach Anspruch 3, wobei der Erdungsstab ein nicht korrodierendes Material umfasst.

5. Modulare Plattform (60) nach einem vorstehenden Anspruch, wobei die gesamte modulare Plattform stromführend ist.

6. Modulare Plattform (60) nach einem vorstehenden Anspruch, wobei die modulare Plattform an einem einzigen Punkt geerdet ist.

7. Modulare Plattform (60) nach einem vorstehenden Anspruch, wobei ein Erdungsstab mit dem metallischen modularen Schaukastenrahmen verbunden ist und ein Bauteil oder eine Sprosse des Erdungsstabs bei einer Verwendung in einem Wasserbehälter in einem aquatischen Behälter befestigt oder teilweise versenkbar ist.

8. Modulare Plattform (60) nach einem vorstehenden Anspruch, weiter einen oder mehrere aquatische Behälter umfassend, wobei jeder Behälter in dem Rahmen gehalten ist und jeder Behälter an einem geeigneten Punkt geerdet ist.

## Revendications

1. Plateforme modulaire (60) servant à supporter un présentoir qui comprend un ou plusieurs bassins aquatiques, la plateforme modulaire comprenant
deux raccords (1, 20, 40) ou plus, chaque raccord comprenant deux bras (3, 5, 7, 23, 24, 25, 26, 43, 44, 45, 46, 47) ou plus, dans lequel le raccord comprend un noyau métallique (9, 29, 59) partiellement enveloppé par un moyen de revêtement non conducteur (11, 31, 51) et le noyau métallique est exposé par le moyen de revêtement au niveau d'un ou plusieurs points de contact (13, 33, 53) ;
au moins un organe de support tubulaire (61) configuré pour recevoir un ou plusieurs bras (3, 5, 7, 23, 24, 25, 26, 43, 44, 45, 46, 47) depuis le un ou plusieurs raccords (1, 20, 40) afin de fournir un raccordement électrique autour de la plateforme, par le biais des raccords entre chacun des organes de support ;
la plateforme modulaire (60) comprenant un moyen de raccordement électrique à la terre.

2. Plateforme modulaire (60) selon la revendication 1, comprenant un seul moyen de raccordement électrique à la terre.

3. Plateforme modulaire (60) selon la revendication 1 ou 2, dans laquelle le ou chaque moyen de raccordement électrique à la terre comprend un piquet de terre.

4. Plateforme modulaire (60) selon la revendication 3, dans laquelle le piquet de terre comprend un matériau non corrosif.

5. Plateforme modulaire (60) selon l'une quelconque des revendications qui précèdent, dans laquelle la totalité de la plateforme modulaire est sous tension.

6. Plateforme modulaire (60) selon l'une quelconque des revendications qui précèdent, dans laquelle la plateforme modulaire est mise à la terre en un point unique.

7. Plateforme modulaire (60) selon l'une quelconque des revendications qui précèdent, dans laquelle un piquet de terre est raccordé au cadre métallique du présentoir modulaire et un composant ou rayon du piquet de terre, lorsqu'il est en service, est fixé et peut être partiellement immergé dans un récipient d'eau à l'intérieur d'un bassin aquatique.

8. Plateforme modulaire (60) selon l'une quelconque des revendications qui précèdent, comprenant en outre un ou plusieurs bassins aquatiques, dans laquelle chaque bassin est maintenu dans le cadre et chaque bassin est mis à la terre en un point approprié.
